# EUROPEAN PATENT APPLICATION

(11) **EP 1 096 191 A2**
(43) Date of publication of application: **02.05.2001**
(21) Application number: 00309674.0
(22) Date of filing: 01.11.2000
(51) Int. Cl.: F16L 17/02, F16L 25/00

(54) **Connector without mechanical retention means**

(30) Priority: 01.11.1999 GB 9925782; 11.12.1999 GB 9929294
(71) Applicant: Pressure Balance Systems Limited, Edingburgh, Midlothian EH10 4HA (GB)
(72) Inventor: Harrison, Edward, Stonehaven AB39 2GF (GB)
(74) Representative: Allan, James Stewart

(57) **Abstract**

A connector is disclosed that includes first and second portions, the first portion being held within the second portion (or vice versa) without the use of any mechanical retention means or device (e.g. screw threads, circlips etc). One of the first and second portions is provided with a seal arrangement that is configured to provide a pressure balance within the connector that allows the first portion to be retained within the second portion without any mechanical retention means or device. The connector can optionally include a valve.

## Description

The present application relates to a connector, and more particularly, but not exclusively, to a connector for use with hydraulic, pneumatic or other types of fluid apparatus and systems.

Conventional connectors typically use a threaded coupling to interconnect parts of pneumatic, hydraulic or other types of fluid apparatus and systems. These types of connection require the connector to be rotated to engage the thread on the apparatus to which the connector is to be coupled. This type of conventional threaded connector suffers from the disadvantage that the connector is required to be rotated a number of times before a reliable connection is made, and this is often difficult in subsea applications or where the apparatus is in a confined space for example.

Additionally, some types of threaded connector require a sealant such as PTFE, Teflon or the like to be provided on the thread of the connector before coupling takes place to facilitate a good seal between the connector and the apparatus. The sealant is generally required as the metal-to-metal seal established by the thread can often result in a poor seal.

Also, there is often a risk to personnel through catastrophic failure of the threaded couplings (i.e. separation of the threaded couplings), such failures being caused by, for example, thread corrosion, mismatched threads or crossed threads.

Furthermore, these threaded couplings can be quite expensive to manufacture as they require a substantial amount of machining or accurate mouldings to establish the threads both on the connector and on the apparatus, and there is also a considerable set up time for the machining or moulding process.

According to the present invention there is provided a connector comprising first and second portions engageable with one another, each portion being provided with a bore for passage of fluids therethrough, and a seal arrangement, wherein the seal arrangement provides a pressure balance that maintains the engagement of the portions.

The seal arrangement typically provides a pressure balance between the first and second portions.

The first portion typically comprises a pin, and the second portion typically comprises a socket.

The bore in the first portion optionally comprises a blanked-off longitudinal bore, and a port in one side of the first portion.

The bore in the second portion of the connector may comprise a throughbore, and a port in one side of the second portion. The throughbore in the second portion is optionally a smooth bore.

In use, the first portion is typically inserted into the second portion. Also, in use, the port in the first portion is typically axially aligned with the port of the second portion.

The seal arrangement is typically provided on an inner surface of the second portion. Alternatively, the seal arrangement may be provided on an outer surface of the first portion.

The cross-sectional areas of the bores at each of the seals are preferably equal.

The seal arrangement typically comprises a first seal disposed on one side of the bore of the second portion, and a second seal disposed on the other side of the bore of the second portion. The seals are typically on opposite sides of the port of the second portion. Alternatively, the seal arrangement may comprise a first seal disposed on one side of the bore of the first portion, and a second seal disposed on the other side of the bore of the first portion.

For example, at least a portion of the first (male) portion can typically be received in at least a portion of the second (female) portion, and is preferably slidable therein. The bores for fluid in the first and second portions can typically be moved into and out of alignment by the sliding motion. The seals are typically disposed on either side of the bores and typically create piston areas on each respective seal with an equal area. Equal piston areas at the seals ensure that pressure applied to the slidable first portion in the second portion balances the forces acting on the first portion, and the inventor has found that this is sufficient to maintain the connection, even with very high pressures, in the absence of mechanical connection means such as screw threads etc.

Optionally, the seal arrangement may include secondary seals provided on either side of the bores or ports in the first or second portions.

The connector may further include locating means to facilitate alignment of the port in the first portion with the port in the second portion. This may be achieved by the shape of the pin and socket, or the provision of a key on one of the first and second portions and a keyway on the other of the first and second portions. The locating means typically comprises an alignment pin provided on one of the first and second portions that engages with an aperture provided on the other of the first and second portions. The alignment pin is optionally a spring-loaded pin. The alignment pin is typically provided on the first portion, and the aperture provided on the second portion. The locating means does not necessarily provide a mechanical coupling between the male and female portions; thus, the locating means does not necessarily prevent the male portion from disengaging the female portion in use as the pressure balance created by the seal arrangement is sufficient to keep the portions of the connector in place. However, the locating means may be used to prevent accidental separation of the first and second portions, e.g. by accidental pulling on the fluid couplings attached to the first or second portions.

Optionally, the connector may include a valve. The valve typically comprises a valve stem that is capable of engaging and disengaging a valve seat, the valve seat typically being provided in the bore of the first portion. The valve stem may optionally be biased away from the valve seat, typically by a spring.

The valve may comprise a thermostat valve, a shut-off valve or the like.

The shut-off valve typically includes a gland, the gland typically being threadedly coupled to the first portion. The valve stem is typically threadedly engaged in a bore in the gland. The valve stem is typically provided with an adjustment knob on one end thereof to facilitate rotation of the valve stem.

The thermostat valve typically comprises a valve assembly that is threadedly engaged with the first portion of the connector. The valve assembly typically includes at least a second valve stem that acts on the valve stem. The valve assembly is typically provided with an adjustment knob, where rotation of the adjustment knob causes the valve stem to engage or disengage the valve seat.

Embodiments of the present invention shall now be described, by way of example only, with reference to the accompanying drawings in which:-
Fig. 1 is a cross-section of a conventional shuttle valve provided with threaded connections;
Fig. 2 is a cross-section of a shuttle valve provided with a connector in accordance the present invention;
Fig. 3 is an example of an in-line fluid connector according to the present invention;
Fig. 4 is a schematic diagram showing an embodiment of an accumulator system using connectors in accordance with the present invention;
Fig. 5 is a part cross-sectional elevation of a radiator illustrating the conventional coupling to a radiator; and
Fig. 6 is a part cross-sectional elevation of a radiator provided with connectors according to the present invention.

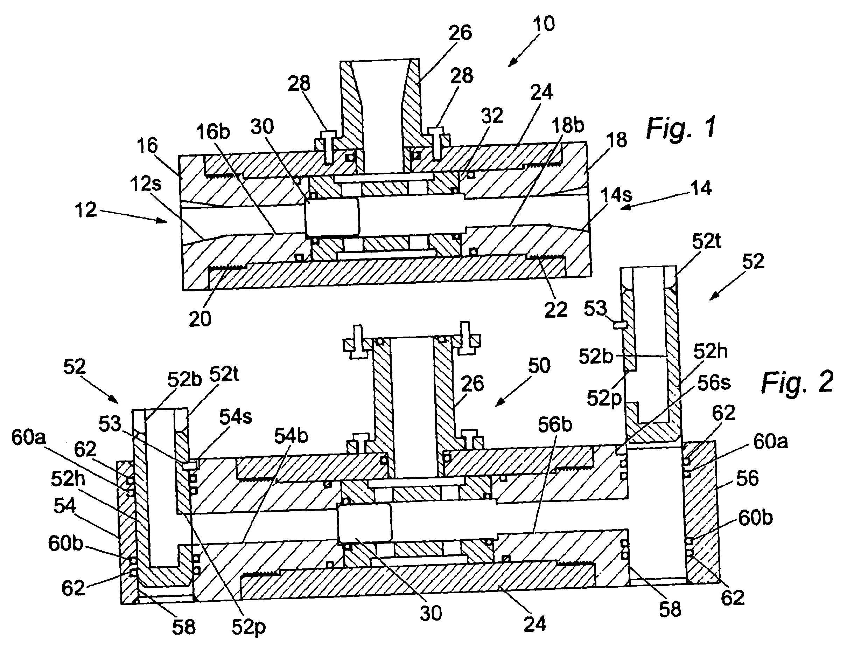

Referring to the drawings, Fig. 1 shows a conventional shuttle valve, generally designated 10, that includes a first inlet 12 and a second inlet 14. The first and second inlets 12, 14 are provided with a first inlet end cap 16 and a second inlet end cap 18, respectively. The first and second inlet end caps 16, 18 are provided with screw thread connections 20, 22 respectively that allow the first and second inlet end caps 16, 18 to be respectively coupled to a main body 24 of the shuttle valve 10. The first and second inlets 12, 14 are provided with internal screw threads 12s, 14s to allow conduits or the like to be threadedly coupled thereto to facilitate the transfer of fluids through the shuttle valve 10. The internal screw threads 12s, 14s provide a mechanical connection between conduits or the like coupled to the first and second inlets 12, 14 and additionally provide a seal therebetween.

The first and second end caps 16, 18 are provided with bores 16b, 18b respectively, that facilitate the flow of fluid through the first and second end caps 16, 18 to an outlet end cap 26 that is attached to the body 24 using, for example, a plurality of screws 28 (two shown in Fig. 1).

Fluid flow from the first or second inlet end caps 16, 18 (i.e. from the first or second inlets 12, 14) can be diverted to the outlet by movement of a shuttle piston 30 within a bore 32 of the body 24. Thus, if fluid enters the shuttle valve 10 via the second inlet 14, the shuttle piston 30 is moved towards the left as shown in Fig. 1 by the flow of fluid. This movement of the shuttle piston 30 blocks off the first inlet 12, so that fluid enters via the second inlet 14 and allows fluid to flow through the outlet cap 26. If fluid is to be transferred from the first inlet 12 to the outlet 26, fluid pressure is applied through the first inlet 12 which forces the shuttle piston 30 to the right (as shown in Fig. 1) by the flow of fluid. The movement of the shuttle piston 30 blocks off the second inlet 14, and allows fluid to flow from the first inlet 12 to the outlet end cap 26.

The fluid couplings to the prior art shuttle valve 10 require conduits (e.g. hoses) or the like to be threadedly engaged with the internal screw threads 12s, 14s of the first and second inlets 12, 14. Thus, the fluid couplings typically require to be rotated several times to effect coupling to the inlets 12, 14. This is often difficult where the valve 10 is located underwater, for example, or in locations that are difficult to access, or where space is restricted.

Additionally, a sealing material such as PTFE, Teflon or the like may be required on the internal screw threads 12s, 14s and/or the threads on the fluid coupling to be attached thereto before mating. This facilitates a good seal between the fluid coupling and the first and second inlets 12, 14.

Fig. 2 shows an alternative shuttle valve 50 that incorporates two of the connectors according to the present invention. The shuttle valve 50 has several features in common with shuttle valve 10 (like features being designated with the same reference numerals), but the configuration of the first and second inlet end caps 16, 18 has been adapted for use with the connector of the present invention.

The connector comprises a first portion, typically in the form of a pin 52, and a second portion, typically in the form of a socket 54, 56. The right hand side of Fig. 2 shows the pin 52 disconnected from the socket 56 of the shuttle valve 50, whereas the left-hand side of Fig. 2 shows the pin 52 mated with the socket 54 of the shuttle valve 50. The first portion is typically a male portion and the second portion is typically a female portion.

In the embodiment of shuttle valve 50 shown in Fig. 2, the sockets 54, 56 are threadedly engaged with the body 24 as in shuttle valve 10, although any coupling means may be used. The sockets 54, 56 are each provided with a throughbore 58 that is preferably smooth to facilitate engagement of the pin 52 with the sockets 54, 56 of the shuttle valve 50 (as shown in the left-hand side of Fig. 2). The sockets 54, 56 are also provided with ports 54b, 56b that intersect perpendicularly with the smooth throughbores 58 to provide a fluid path through the shuttle valve 50.

The pins 52 typically comprise cylindrical housings 52h with a blind bore 52b and a port 52p leading into the bore 52b through one side of the cylindrical housing 52h. The upper end of the cylindrical housing 52h is provided with a terminal 52t that may be of any conventional type, such as a weld neck for hard piping or a crimp type termination for flexible hose. The terminal 52t is selected from any number of conventional types of terminals to suit the particular application.

The ports 52p in the pins 52 are axially aligned in use with the bores or ports 54b, 56b of the sockets 54, 56. To facilitate axial alignment, the pin 52 may be provided with an alignment pin 53, typically a spring-loaded pin, that engages in a corresponding slot or aperture 54s, 56s in the sockets 54, 56. It should be noted that the engagement of the alignment pin 53 in the slots 54s, 56s is merely to facilitate alignment of the port 52p with the bores or ports 54b, 56b; it does not provide any mechanical retention of the pin 52 with the sockets 54, 56, although it can do so if required. It may be desirable to have some form of mechanical retention for safety purposes to prevent accidental disconnection of the connector, although this is not required to maintain engagement of the pins 52 in the socket 54, 56.

Thus, if the alignment pin 53 is spring-loaded for example, the bias of the spring can be set such that if the hose, conduit or the like attached to terminal 52t of the pin 52 is accidentally pulled, then disconnection of the pin 52 from the socket 54, 56 is substantially prevented. Alternatively, the pin 52 may extend all the way through the throughbore 58 and have a circlip, split pin or the like attached thereto to prevent accidental disconnection.

It should be noted that other means of alignment may be used. For example, the pin 52 and the sockets 54, 56 may be shaped so that they can only engage in a certain configuration. Alternatively, one of the pin 52 and the sockets 54, 56 may be provided with a key, that engages with a keyway provided on the other of the pin 52 and the sockets 54, 56.

In the embodiment shown in Fig. 2, the sockets 54, 56 are provided with a seal arrangement. The seal arrangement in the embodiment shown in Fig. 2 comprises a first (primary) annular seal 60 and an optional second annular seal 62. The first seal 60, in the Fig. 2 embodiment, comprises a first seal 60a disposed on one side of the ports 54b, 56b, and a second seal 60b provided equidistantly on the other side of the ports 54b, 56b in the sockets 54, 56. It should be noted that the seals 60a, 60b need not be equidistant on either side of the ports 54b, 56b; the only requirement is that the area of the throughbore 58 across which 60a seals is equal to the area across which 60b seals; i.e. the cross-sectional area through the seals 60a and 60b are equal. When the areas on which the pressure acts on either side of the ports 54b, 56b are equal, the forces exerted by fluid pressure in the bore on each will be equal keeping the pin 52 located in the smooth throughbore 58 of the sockets 54, 56 because the force acting to force the pins 52 out of the sockets 54, 56 is equalised by the force acting in the opposite direction. This pressure balance can be achieved by providing seals 60a, 60b on both sides of the ports 54b, 50b.

No mechanical retention (e.g. screw threads or the like) is required to maintain the pin 52 in engagement with the sockets 54, 56 of the shuttle valve 50. Thus, the connector is easier and quicker to connect and disconnect than conventional threaded connections. Connection of the pins 52 and sockets 54, 56 is effected by pushing the pin 52 into engagement with a socket 54, 56; disconnection of the connector is effected by pulling the pin 52 out of engagement with the socket 54, 56.

The first and second seals 60, 62 are typically annular and may comprise lip seals. Lip seals are pressure-energised seals that have a lip facing the pressure. These types of seal are more reliable at higher pressures, as they are pressure energised. O-ring seals may be used for lower pressure applications, that is at pressures below around 3000 pounds per square inch (psi). The second seal 62 provides a back-up to the first seal 60 in the event that the first seal 60 fails. O-ring and lip seals can be used together; e.g. as first and second seals.

It should be noted that the first and/or second seals 60, 62 may be provided on the pin 52, providing that they seal across equal areas of the bore 58 so that the areas on which the pressure acts on each side of the port 52p is equal.

In the event that the first seal 60 fails, the second back-up seal 62 can prevent any loss of pressure. In the event of the second seal 62 failing, or if the second seal 62 is not provided, the pressure that is lost due to the failure of the seals 60, 62 is vented to atmosphere. However, the pressure balance is maintained as an equal amount of pressure is being lost on each side of the seal (i.e. the amount of pressure lost is equal to the reduction of pressure acting on the seal), and thus the pin 52 will remain engaged with the socket 54, 56.

In use, the pin 52 is engaged with the smooth throughbores 58 of the socket 54, 56 using the alignment pin 53 and the slots 54s, 56s to facilitate axial alignment of the ports 52p and the bores or ports 54b, 56b. The pin 52 is held in place using the pressure balance created by the first (primary) seals 60a, 60b as described above, and thus no mechanical retention means is required.

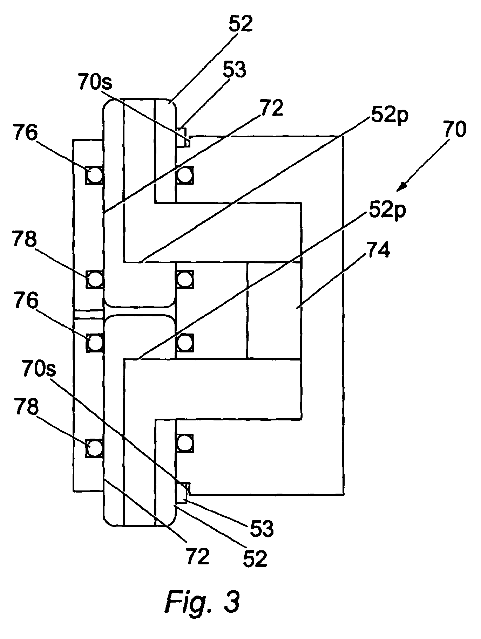

Fig. 3 shows an example of an in-line fluid connector 70 that is provided with sockets 72 that mate with the pins 52. The connector 70 is provided with a U-shaped bore 74. The sockets 72 of the in-line connector 70 are provided with a seal arrangement similar to that of the shuttle valve 50 in Fig. 2. The seal arrangement comprises two primary seals 76, 78 that are placed across areas of the sockets 72 of equal cross-section. It should be noted that back-up seals (not shown in Fig. 3) may be provided to ensure no loss of pressure if the primary seals 76, 78 fail. As before, the pin 52 is provided with the spring-loaded alignment pin 53 that engages in a slot 70s to facilitate axial alignment of the ports 52p of the pins 52 with the terminations of the U-shaped bore 74 of the in-line connector 70. Other alignment means may also be used, as described above.

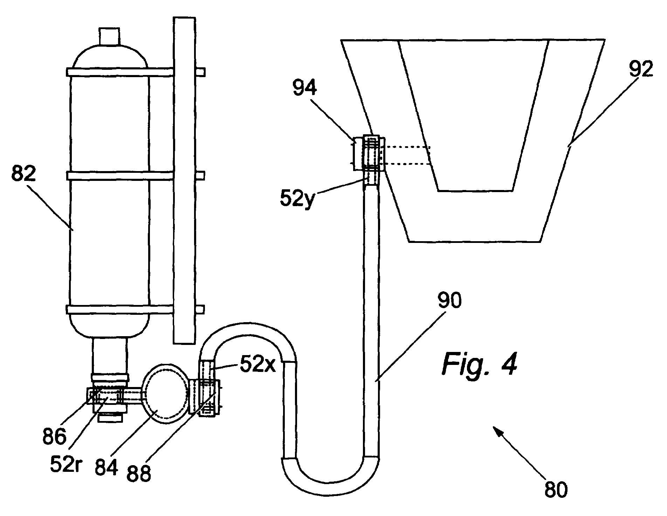

Fig. 4 shows an example of an accumulator system, generally designated 80. System 80 includes an accumulator bottle 82 that may form part of a bank of similar accumulator bottles, bottle 80 being coupled to a manifold 84 at a lower end thereof. The manifold 84 is provided with a pin 52r (similar to pins 52 of Figs 2 and 3) that engages with a socket 86 (e.g. a smooth bore) provided at the lower end of the accumulator bottle 80. The socket 80 (or the pin 52r) is provided with seals (not shown) that seal across an equal cross-sectional area of the socket 86, as with the embodiments shown in Figs 2 and 3.

The manifold 84 is further provided with a socket 88 at the opposite end to the pin 52r. A flexible hose 90 is used to couple the manifold 84 (and thus the accumulator bottle 80) to a tank 92. The flexible hose 90 is provided with a pin 52x, 52y at each end thereof to facilitate the fluid coupling. One of the pins 52x engages with the socket 88 provided on the manifold 84; the other pin 52y engages with a socket 94 provided on the tank 92. The sockets 88, 94 (or the pins 52x, 52y) are provided with seals (not shown) that seal across an equal cross-sectional area of the socket 88, 94, as with the embodiments shown in Figs 2 and 3.

As will be appreciated, if, for example, the hose 90 bursts during use, it may be simply replaced by closing off the pressure in the system, removing the pins 52x, 52y from the sockets 88, 94 provided on the manifold 84 and tank 92 respectively. Disconnection is effected by simply pulling the pins 52x, 52y axially away from the sockets 88, 94. There is no requirement to twist the hose 90 as would be the case with conventional connections on accumulator systems, as there are no threaded connections. Once the hose 90 has been removed, a replacement can be easily coupled into the system 80 by, for example, aligning the alignment pins (not shown in Fig. 4) provided on the pins 52x, 52y with slots (not shown in Fig. 4) provided on the sockets 88, 94 (as previously described) and pushing the pins 52x, 52y into engagement with the sockets 88, 94. Again, there is no requirement to twist or rotate the hose 90 as the pins 52x, 52y are simply engaged and disengaged from the sockets 88, 94 by a simple pushing or pulling motion.

A number of tests have been conducted on a connector to prove the integrity of the connector and that the pressure balance works. The connector was tested by applying hydrostatic pressure up to 5000 psi in 500 psi intervals to the pin, with the socket blanked off. The pressure was held for a period of five minutes. There was no disconnection of the pin from the socket (or vice versa) and no leaks were found. Thus the integrity of the connector was maintained without the use of any mechanical retention means between the pin and socket.

The test was then repeated by applying hydrostatic pressure up to 5000 psi in 500 psi intervals to the socket, with the pin port blanked off. The pressure was held for a period of five minutes. Again, there was no disconnection of the pin from the socket and no leaks were found. Again, the integrity of the connector was maintained without the use of any mechanical retention means between the pin and socket.

A further test over 50 cycles was then carried out, each cycle consisting of 1) mating the pin with the socket; 2) applying a test pressure of 5000 psi; 3) holding the test pressure for ten minutes; 4) venting the test pressure to 0 psi; and 5) disengaging the pin from the socket. The next cycle was then continued in sequence from step 1). This cyclic testing was done by applying hydrostatic pressure to the socket with the pin blanked off, and another test cycle was done by applying hydrostatic pressure to the pin with the socket blanked off. The tests were carried out using fresh water as a test fluid and no leaks were found on any test. Also, the pin remained engaged in the socket throughout the test.

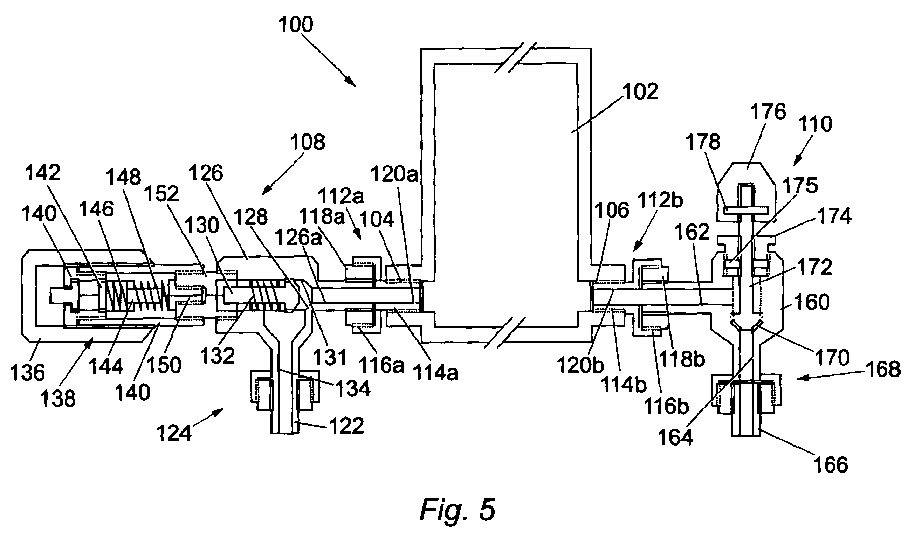

Referring to Fig. 5 there is shown a part cross-sectional elevation of a conventional radiator installation, generally designated 100. Installation 100 is a typical standard installation that is installed in most houses, factories and the like.

Installation 100 includes a radiator 102 that is provided with threaded ports 104, 106 at the lower left and right hand corners respectively, thereof. Threaded ports 104, 106 are used to threadedly couple a thermostat valve 108 and a shut-off valve 110, respectively, to the radiator 102. Two threaded unions 112a, 112b, generally of the same construction, are used to couple the thermostat valve 108 and the shut-off valve 110 to the radiator 102 (via threaded ports 104, 106 in the radiator 102). Threaded unions 112a, 112b include a threaded shaft 114a, 114b that is threadedly engaged in the ports 104, 106 respectively. A threaded port 116a, 116b is located at one end of the shafts 114a, 114b, the threaded ports 116a, 116b receiving a threaded coupling 118a, 118b provided on the thermostat valve 108 and shut-off valve 110, respectively. Threaded unions 112a, 112b are also provided with bores 120a, 120b so that fluid can pass therethrough.

Thermostat valve 108 is a conventional valve and is coupled to a supply pipe 122 via a further threaded union 124, threaded union 124 being similar in construction to threaded unions 112a, 112b.

Thermostat valve 108 includes a valve body 126 that is provided with a first bore 126a that is in fluid communication with the bore 120a of the threaded union 112a (and thus the radiator 102). One end of the first bore 126a is provided with a valve seat 128. A valve stem 130 can move longitudinally in a second bore 131 within valve body 126, so that it can engage and disengage the valve seat 128. Valve stem 130 is typically spring biased by a spring 132. Valve body 126 is provided with a third bore 134 that transfers fluids from the supply pipe 122 through the valve body 126 and into the radiator 102 through the threaded union 112a. The amount of fluid that is transferred through the valve body 126 can be controlled by adjustment of the thermostat valve 108 (i.e. by adjusting the spacing between the valve stem 130 and the valve seat 128).

To provide for varying the flow rate through the thermostat valve 108, valve 108 includes an adjustment knob 136 that is typically held in place on a valve assembly 138, typically by a friction fit. Valve assembly 138 typically comprises a threaded cap 140 that threadedly engages a body 140 of the assembly 138. Threaded cap 140 is provided with a first stem 142 that acts on a second stem 144. The second stem 144 is biased (towards the left in Fig. 5) by first and second springs 146, 148. Second stem 144 passes through a bore (not shown) in a third stem 150, the third stem 150 being threadedly engaged in a junction 152 between the assembly 138 and the valve body 126, the second stem 144 acting on the valve stem 130.

In use, when the adjustment knob 136 is rotated to decrease the amount of fluid flowing into the radiator 102 (i.e. to reduce the temperature), the first stem 142 moves towards the radiator 102 and acts on the second stem 144, which also moves towards the radiator against the bias of first and second springs 146, 148. The second stem 144 acts on the valve stem 130 pushing the valve stem 130 towards the valve seat 128 to reduce the flow of fluid through the valve body 126.

To increase the fluid flow into the radiator 102 (i.e. to increase the temperature) the knob 136 is rotated in the opposite direction. The first and second valve stems 142, 144 move towards the left in Fig. 5 under the bias of first and second springs 146, 148. The valve stem 130 also moves to the left, as the second stem 144 is no longer acting on the valve stem 130, and the fluid pressure in the valve body 126 will push the valve stem 130 away from the valve seat 128.

It should be noted that the amount of fluid passing through the valve body 126 can adjust the position of the valve stem 130, as the force of the fluid passing therethrough can act on the valve stem 130 (against the bias of spring 132) to push the valve stem 130 away from valve seat 128.

Shut-off valve 110 (shown in the closed position in Fig. 5) comprises a valve body 160 that is provided with a first bore 162 that communicates with bore 120b in the threaded union 112b. Shut-off valve 110 is provided with a second bore 164 that communicates with a return pipe 166 that is fluidly coupled to the shut-off valve 110 through a threaded union 168 (threaded union 168 being similar to threaded unions 112a, 112b and 124).

Second bore 164 is provided with a valve seat 170 into which a valve stem 172 can be seated so that fluid flow from the radiator 102 can be stopped as required. Valve stem 172 is threadedly engaged in a gland 174 that is threadedly engaged with valve body 160. Gland 174 is provided with a seal 175 (typically a lip-type seal, stem packer, O-ring or the like) to prevent the ingress of fluid into the gland 174. An adjustment knob 176 is provided at the upper end of the stem 172, in a known manner, and is typically secured to the valve stem 172 using a pin 178.

Rotation of the knob 176 in a first direction moves the valve stem 172 into engagement with the valve seat 170 (as shown in Fig. 5) thus preventing fluid from flowing out of the radiator 102 and into the return pipe 166. Rotation of the knob 176 in a second direction (opposite to the first direction) moves the valve stem 172 away from valve seat 170, thus allowing fluid to flow out of the radiator 102 and into the return pipe 166.

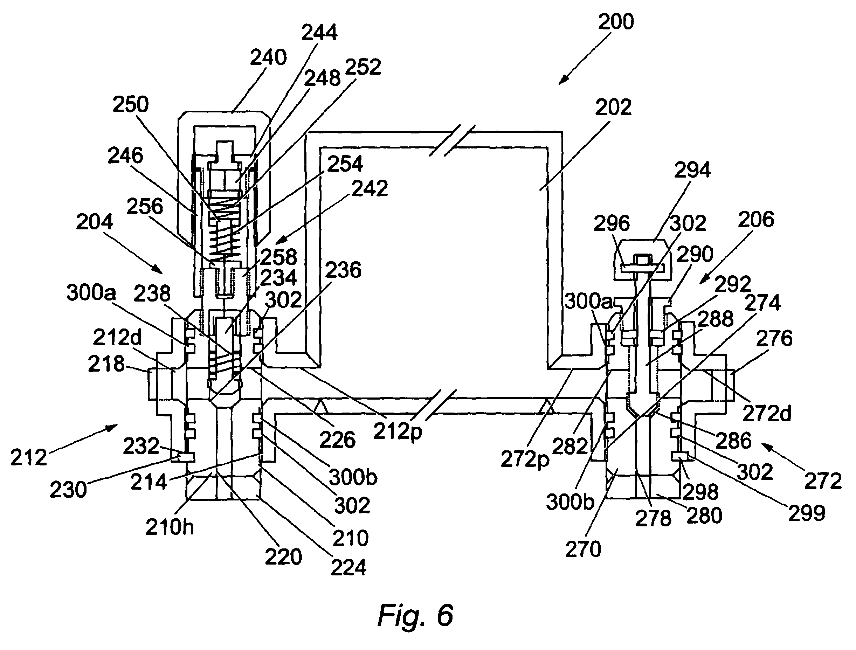

Referring now to Fig. 6, there is shown a part cross-sectional view of a radiator installation 200 that incorporates a radiator 202 adapted for use with connectors according to the present invention.

The radiator 202 is provided with first and second connectors 204, 206 that are similar to the connectors in the previous embodiments (those described with reference to Figs 2, 3 and 4). Connector 204 comprises a first portion, typically in the form of a pin 210, and a second portion, typically in the form of a socket 212. Socket 212 is provided on the radiator 202 and facilitates engagement of the pin 210.

In the embodiment shown in Fig. 6, the socket 212 forms an integral part of the radiator 202, although it will be appreciated that socket 212 may be coupled to the radiator 202 using any conventional means (e.g. welding, screw threads etc). The socket 212 is provided with a smooth throughbore 214 to facilitate engagement of the pin 210 with the socket 212. The socket 212 is also provided with a port 212p that intersects perpendicularly with the smooth throughbore 214 to provide a fluid path through the connector 204 into the radiator 202.

The socket 212 is further provided with a drain port 212d that communicates with the throughbore 214 and the port 212p. Drain port 212d is provided to facilitate easy draining of the radiator 202 for maintenance or replacement thereof. Drain port 212d is plugged using a drain plug 218 that may be of any conventional type, such as a threaded bolt.

Pin 210 in this embodiment is modified to incorporate a thermostat valve, pin 210 typically comprising a cylindrical housing 210h with a first bore 220 for communicating with a supply pipe (not shown). The lower end of the pin 210 is provided with a terminal 224 that may be of any conventional type, such as a weld neck for hard piping or a crimp type termination for flexible hose, and the supply pipe may be coupled thereto using any conventional means. The terminal 224 is selected from any number of conventional types of terminals to suit the particular application.

Pin 210 also includes a throughbore 226 that is perpendicular to the first bore 220 and communicates fluid from the radiator 202 (via port 212p) to the drain port 212d.

The bore 226 in the pin 210 is axially aligned in use with the port 212p of the socket 212 (and thus the radiator 202). To facilitate axial alignment, the pin 210 may be provided with an alignment pin 230, typically a spring-loaded pin, which engages in a corresponding slot or aperture 232 in the socket 212. It should be noted that the engagement of the alignment pin 230 in the slot 232 is merely to facilitate alignment of the bore 226 with the port 212p; it does not provide any mechanical retention of the pin 210 with the socket 212, although it can do so if required. It may be desirable to have some form of mechanical retention for safety purposes to prevent accidental disconnection of the connector 204, although this is not required to maintain engagement of the pin 210 in the socket 212.

Thus, if the alignment pin 230 is spring-loaded for example, the bias of the spring can be set such that if the hose, conduit or the like attached to terminal 224 of the pin 210 is accidentally pulled, then disconnection of the pin 210 from the socket 212 is substantially prevented. Alternatively, the pin 210 may be provided with a circlip, split pin or the like attached at or near the terminal 224 to prevent accidental disconnection.

It should be noted that other means of alignment may be used. For example, the pin 210 and the socket 212 may be shaped so that they can only engage in a certain configuration. Alternatively, one of the pin 210 and the socket 212 may be provided with a key that engages with a keyway provided on the other of the pin 210 and the socket 212.

The connector 204, and in particular the pin 210, is provided with a thermostat valve, the valve including a valve stem 234 that can engage and disengage a valve seat 236 provided at an upper end of the bore 220 in the pin 210. The thermostat valve in this embodiment does not require a valve body (as required in a conventional valve (Fig. 5)), as the pin 210 incorporates the valve seat 236 and bores 220, 226 for fluid communication from the supply pipe to the radiator 202.

Valve stem 234 can move longitudinally within the pin 210 and is spring biased by a spring 238. The amount of fluid that is transferred through the pin 210 can be controlled by adjustment of the thermostat valve (i.e. by adjusting the spacing between the valve stem 234 and the valve seat 236).

To provide for varying the flow rate through the thermostat valve (incorporated as part of the connector 204), the valve includes an adjustment knob 240 that is typically held in place on a valve assembly 242, typically by a friction fit. Valve assembly 242 is similar to valve assembly 138 (Fig. 5) and typically comprises a threaded cap 244 that threadedly engages a body 246 of the assembly 240. Threaded cap 244 is provided with a first stem 248 that acts on a second stem 250. The second stem 250 is biased by first and second springs 252, 254 (upwardly as shown in Fig. 6). Second stem 250 passes through a bore in a third stem 256, the third stem 256 being threadedly engaged in a junction 258 between the assembly 242 and the cylindrical housing 210h of the pin 210, the second stem 250 acting on the valve stem 234.

In use, when the adjustment knob 240 is rotated to decrease the amount of fluid flowing into the radiator 202 (i.e. to reduce the temperature), the first stem 248 moves downwards and acts on the second stem 250, which also moves downwards against the bias of first and second springs 252, 254. The second stem 250 acts on the valve stem 234 pushing the valve stem 234 towards the valve seat 236 to reduce the flow of fluid through the connector 204.

To increase the fluid flow into the radiator 202 (i.e. to increase the temperature) the knob 240 is rotated in the opposite direction. The first and second valve stems 248, 250 move upwards under the bias of first and second springs 252, 254. The valve stem 234 also moves upwards as the second stem 250 is no longer acting on the valve stem 234, under the bias of spring 238.

It should be noted that the amount of fluid passing through the connector 204 can adjust the position of the valve stem 234, as the force of the fluid passing therethrough can act on the valve stem 234 (against the bias of spring 238) to push the valve stem 234 away from valve seat 236.

Connector 206 incorporates a shut-off valve (similar to that shown in Fig. 5). Connector 206 comprises a first portion, typically in the form of a pin 270, and a second portion, typically in the form of a socket 272, socket 272 being provided on the radiator 202. Socket 272 is similar in construction to socket 212 and facilitates engagement of the pin 270.

In the embodiment shown in Fig. 6, the socket 272 forms an integral part of the radiator 202, although it will be appreciated that it may be coupled thereto using any conventional means. The socket 272 is provided with a smooth throughbore 274 to facilitate engagement of the pin 270 with the socket 272. The socket 272 is also provided with a port 272p that intersects perpendicularly with the smooth throughbore 274 to provide a fluid path through the connector 206 into the radiator 202.

The socket 272 is further provided with a drain port 272d that communicates with the throughbore 274 and the port 272p. Drain port 272d is provided to facilitate easy draining of the radiator 202 for maintenance or replacement thereof. Drain port 272d is plugged using a drain plug 276 that may be of any conventional type, such as a threaded bolt.

Pin 270 includes a first bore 278 that communicates with a return pipe (not shown). The pin 270 is provided with a terminal 280 that may be of any conventional type, such as a weld neck for hard piping or a crimp type termination for flexible hose, and the supply pipe may be coupled thereto using any conventional means. The terminal 280 is selected from any number of conventional types of terminals to suit the particular application.

Pin 270 is provided with a second bore 282 that is perpendicular to first bore 278, and communicates fluid to the port 272p in the socket 272, and also to the drain plug 276.

The first bore 278 is provided with a valve seat 286 into which a valve stem 288 can be seated (as shown in Fig. 6) so that fluid flow from the radiator 202 can be stopped as required. Valve stem 288 threadedly engages a gland 290 that is threadedly engaged with pin 270. Gland 290 is provided with a seal 292 (typically a lip-type seal, stem packer, O-ring or the like) to prevent the ingress of fluid into the gland 290.

The bore 282 in the pin 270 is axially aligned in use with the port 272p of the socket 272 (and thus the radiator 202). To facilitate axial alignment, the pin 270 may be provided with an alignment pin 298, typically a spring-loaded pin, which engages in a corresponding slot or aperture 299 in the socket 272. It should be noted that the engagement of the alignment pin 298 in the slot 299 is merely to facilitate alignment of the bore 282 with the port 272p; it does not provide any mechanical retention of the pin 270 with the socket 272, although it can do so if required. It may be desirable to have some form of mechanical retention for safety purposes to prevent accidental disconnection of the connector, although this is not required to maintain engagement of the pin 270 in the socket 272.

Different forms of mechanical retention and alternative alignment methods have been described with reference to connector 204 above, and any of these may be used with connector 206.

An adjustment knob 294 is provided at the upper end of the stem 288, in a known manner, and is typically secured to the valve stem 294 using a pin 296.

Rotation of the knob 294 in a first direction moves the valve stem 288 into engagement with the valve seat 286 (as shown in Fig. 6) thus preventing fluid from flowing out of the radiator 202 and into the return pipe. Rotation of the knob 294 in a second direction (opposite to the first direction) moves the valve stem 288 away from valve seat 286, thus allowing fluid to flow out of the radiator 202 and into the return pipe.

Unlike the previous embodiments, the pins 210, 270 are provided with a seal arrangement, although it is of course possible to have the seal arrangement provided on the sockets 212, 272. The seal arrangement in the embodiment shown in Fig. 6 comprises a first (primary) annular seal 300 and an optional second annular seal 302. The first seal 300, in the Fig. 6 embodiment, comprises a first seal 300a disposed on one side of the bores 226, 282, and a second seal 300b provided equidistantly on the other side of the bores 226, 282. It should be noted that the seals 300a, 300b need not be equidistant on either side of the bores 226, 282; the only requirement is that the area of the bores 214, 274 in the sockets 212, 272 across which 300a seals is equal to the area across which 300b seals; i.e. the cross-sectional areas through the seals 300a and 300b are equal. When the areas on which the pressure acts on either side of the bores 226, 282 are equal, the forces exerted by fluid pressure in the bore on each will be equal, thus keeping the pins 210, 270 located in the throughbores 214, 274 of the sockets 212, 272 because the force acting to force the pins 210, 270 out of the sockets 212, 272 is equalised by the force acting in the opposite direction. This pressure balance can be achieved by providing seals 300a, 300b on both sides of the bores 226, 282.

No mechanical retention (e.g. screw threads or the like) is required to maintain the pins 210, 270 in engagement with the sockets 212, 272. Thus, the connectors 204, 206 are easier and quicker to connect and disconnect than conventional threaded connections.

The first and second seals 300, 302 are typically annular and may comprise lip seals. Lip seals are pressure-energised seals that have a lip facing the pressure. These types of seal are more reliable at higher pressures, as they are pressure energised. O-ring seals may be used for lower pressure applications, that is at pressures below around 3000 pounds per square inch (psi). The second seal 302 provides a back-up to the first seal 300 in the event that the first seal 300 fails. O-ring and lip seals can be used together; e.g. as first and second seals.

It should be noted that the first and/or second seals 300, 302 may be provided on the sockets 212, 272, providing that they seal across equal areas of the bores 214, 274 so that the area on which the pressure acts on each side of the bores 226, 282 is equal.

In the event that the first seal 300 fails, the second back-up seal 302 can prevent any loss of pressure. In the event of the second seal 302 failing, or if the second seal 302 is not provided, the pressure that is lost due to the failure of the seals 300, 302 is vented to atmosphere. However, the pressure balance is maintained as an equal amount of pressure is being lost on each side of the seal (i.e. the amount of pressure lost is equal to the reduction of pressure acting on the seal), and thus the pins 210, 270 will remain engaged with the sockets 212, 272.

In use, the pins 210, 270 are attached to the supply and return pipe respectively using the terminals 224, 280 and any conventional means. The pins 210, 270 are preferably attached to the supply and return pipes taking note of the orientation of the sockets 212, 272 so that they can be aligned using the alignment pins 230, 298 and slots 232, 299. The radiator 202 is then lifted above the pins 210, 270 so that the pins 210, 270 are aligned with the bores 214, 274 in the sockets 212, 272. Thereafter, the radiator 202 is lowered so that the pins 210, 270 engage the bores 214, 274, using the alignment pins 230, 298 and the slots 232, 299 to facilitate axial alignment of the ports 226, 282 and the ports 212p, 272p. The pins 210, 270 are held in place using the pressure balance created by the first (primary) seals 300a, 300b as described above, and thus no mechanical retention means is required, although mechanical retention may be provided (e.g. for safety purposes) as described above. The shut-off valve (incorporated as part of the connector 206) can then be opened to allow fluid into the radiator via the thermostat valve (incorporated as part of connector 204) which can be set to the desired temperature.

If the radiator requires to be replaced, the shut-off valve and the thermostat valve are closed and the drain plugs 218, 276 removed to drain the fluid from the radiator 202. Thereafter, the adjustment knob 240 (or valve assembly 246) is removed as described above, and the radiator 202 is then lifted off the pins 212, 272. The radiator 202 can then be replaced as described above.

It will be appreciated that the radiator 202 may be mounted on a wall first (using conventional brackets) and the pins 210, 270 inserted into the sockets 212, 272 thereafter.

It should be noted that if the throughbore 214 in the socket 212 is not of a sufficient inner diameter to allow the radiator 202 to be lifted off the pin 210, then the adjustment knob 240 may be removed to facilitate removal of the radiator 202. This can only be done if the valve assembly 242 is of an outside diameter that is less than the inside diameter of the throughbore 214. If the valve assembly 242 is of a greater outer diameter than the inner diameter of the throughbore 214, then the valve assembly 242 may be removed. In this case, the valve assembly 242 would be rotated in a first direction so that the threaded coupling between the body 246 of the valve assembly 246 and the junction 258 is disengaged. It should be noted that the connector 206 (incorporating the shut-off valve) would be closed beforehand and the radiator 202 drained using one or both of the drain plugs 218, 276. The thermostat valve 240 would also be fully closed. A threaded cap (not shown) can then be positioned over the junction 258 and the radiator 202 lifted off the pin 210 thereafter.

The connectors described herein have been described with reference to a shuttle valve and a radiator installation, but it will be appreciated that it may be used on any gas, water, pneumatic, hydraulic or any other type of fluid system or apparatus to replace conventional threaded or other types of couplings. For example, the connectors may be used with central heating systems (e.g. a radiator installation), sprinkler systems, any plumbing or ventilation systems, or cooling and lubrication systems in vehicles. The connectors may be used to replace any conventional type of fluid coupling, the materials for the connectors and the type of seal used being dependent upon the particular application.

It will also be appreciated that although the pin described herein has been described as a cylindrical housing, other shapes and configurations may be used.

It will be apparent that the connectors described herein are particularly advantageous where the apparatus or system is located in an area that has limited access (e.g. subsea), as connection and disconnection are simply effected by a pushing or pulling movement.

Modifications and improvements may be made to the foregoing without departing from the scope of the present invention.

## Claims

1. A connector comprising first and second portions engageable with one another, each portion being provided with a bore for passage of fluids therethrough, and a seal arrangement, wherein the seal arrangement provides a pressure balance that maintains the engagement of the portions.

2. A connector according to claim 1, wherein seal arrangement maintains a pressure balance between the first and second portions.

3. A connector according to either preceding claim, wherein the first portion is inserted into the second portion in use.

4. A connector according to any preceding claim, wherein the seal arrangement is provided on an inner surface of the second portion.

5. A connector according to any one of claims 1 to 3, wherein the seal arrangement is provided on an outer surface of the first portion.

6. A connector according to any preceding claim, wherein the seal arrangement comprises a first seal disposed on one side of the bore of the second portion, and a second seal disposed on the other side of the bore of the second portion.

7. A connector according to any preceding claim, wherein the bore in the first portion comprises a blanked-off longitudinal bore, and a port in one side of the first portion.

8. A connector according to claim 7, wherein the bore in the second portion of the connector comprises a throughbore, and a port in one side of the second portion.

9. A connector according to claim 7 or claim 8, wherein the first portion is received in the throughbore of the second portion or vice versa.

10. A connector according to claim 8 or claim 9, wherein the port in the first portion is axially aligned with the port of the second portion in use.

11. A connector according to any one of claims 8 to 10, wherein the connector includes locating means to facilitate alignment of the port in the first portion with the port in the second portion.

12. A connector according to any one of claims 1 to 11, wherein the seal arrangement comprises a first seal disposed on one side of the port of the first or second portions, and a second seal disposed on the other side of the port of the first portion or second portions.

13. A connector according to claim 12, wherein the seals are on opposite sides of the port of the second portion.

14. A connector according to claim 12 or claim 13, wherein the seals that are disposed on either side of the ports create piston areas on each respective seal with an equal area.

15. A connector according to any preceding claim, wherein the seal arrangement includes secondary seals provided on each side of the ports in the first or second portions.

16. A connector according to any one of claims 12 to 15, wherein the cross-sectional areas of the bores at each of the seals are preferably equal.

17. A connector according to any preceding claim, wherein the first portion is slidable within the second portion or vice versa.

18. A connector according to claim 17, wherein the bores for fluid in the first and second portions can be moved into and out of alignment by the sliding motion.

19. A connector according to any preceding claim, wherein the connector includes a valve.

20. A connector according to claim 19, wherein the valve comprises a valve stem that is capable of engaging and disengaging a valve seat.

21. A connector according to claim 20, wherein the valve seat is provided in the bore of the first portion or the second portion.

22. A connector according to claim 20 or claim 21, wherein the valve stem is biased away from the valve seat by a spring.

23. A connector according to any one of claims 19 to 22, wherein the valve comprises a thermostat valve, a shut-off valve or the like.

24. A connector according to claim 23, wherein the shut-off valve includes a gland that is threadedly coupled to the first portion or the second portion.

25. A connector according to claim 24, wherein the valve stem is threadedly engaged in a bore in the gland.

26. A connector according to claim 23, wherein the thermostat valve comprises a valve assembly that is threadedly engaged with the first portion or the second portion of the connector.
